Europäisches Patentamt

European Patent Office

Office européen des brevets

(11) Numéro de publication: **0 401 102**
**A1**

## (12) DEMANDE DE BREVET EUROPEEN

(21) Numéro de dépôt: 90401418.0

(51) Int. Cl.⁵ **B60F 1/04, B61D 3/18**

(22) Date de dépôt: 28.05.90

(30) Priorité: 02.06.89 FR 8907699

(43) Date de publication de la demande:
**05.12.90 Bulletin 90/49**

(84) Etats contractants désignés:
**BE DE DK ES FR GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Rollet, Jean**
**2 rue Jean Bart**
**F-89000 Auxerre(FR)**
Inventeur: **Leclercq, Philippe**
**1 rue Désiré Pelabon**
**F-59154 Crespin(FR)**

(74) Mandataire: **Kügele, Bernhard et al**
**NOVAPAT FRANCE 63 bis, boulevard Bessières**
**F-75017 Paris(FR)**

(54) **Dispositif de transport combiné rail-route.**

(57) La présente invention a pour objet un dispositif de transport combiné rail-route comprenant des semi-remorques (1) et des bogies (3a et 3b) sur lesquels les semi-remorques peuvent reposer et être fixées à volonté par leur extrémité avant ou par leur extrémité arrière de manière à former un train comprenant une succession de semi-remorques et de bogies. La semi-remorque (1) comporte une suspension à hauteur variable et présente à l'avant deux mâchoires (6) à fermeture automatique et ouverture commandée ainsi que des béquilles d'appui (5) et à l'arrière deux pivots (8) écartés transversalement l'un de l'autre. Les bogies sont prévus les uns pour être disposés entre deux semi-remorques (1) et les autres pour être disposés indifféremment à l'une ou l'autre des extrémités du train formé; un bogie intermédiaire (3a) comprend d'une part une traverse centrale (11) munie de deux machoîres doubles (12) qui ont la même disposition relative que les pivots arrière (8)d'une semi-remorque, sont montées dans des blocs tournants (13) et propres à s'accoupler auxdits pivots arrière (8), et d'autre part deux plateaux (15) qui sont montés basculants par rapport à la traverse (11) autour d'un axe transversal et qui portent chacun un pivot (16) propre à s'accoupler dans les mâchoires avant (6) d'une semi-remorque; un bogie d'extrémité (3b) comporte une traverse (18) munie d'une part de deux mâchoires doubles (19) à fermeture automatique et ouverture commandée qui ont la même disposition relative que les pivots (8) d'une semi-remorque et sont propres à s'accoupler à ces pivots arrière et d'autre part d'un pivot (20) propre à se verrouiller dans les mâchoires avant (6) d'une semi-remorque et d'un ancrage (21) propre à recevoir la cheville ouvrière (4) d'une semi-remorque, ainsi qu'un vérin (23) propre à exercer une traction ou une poussée sur l'avant d'une semi-remorque (1).

FIG. 10

La présente invention concerne un dispositif de transport combiné rail-route. Ce type de dispositif permet de profiter à la fois des avantages du transport sur rail pour les grandes distances et du transport sur route pour les courtes distances.

On connait ainsi des dispositifs comprenant au moins une semi-remorque et des bogies sur lesquels des semi-remorques peuvent reposer et être fixées à volonté par leur extrémité avant ou par leur extrémité arrière de manière à pouvoir former un train comprenant une succession de semi-remorques et de bogies, une semi-remorque étant fixée à un bogie par son extrémité avant et au boogie suivant par son extrémité arrière. Mais dans les dispositifs de ce genre actuellement réalisés la liaison des semi-remorques et des bogies est relativement compliquée et difficile à mettre en oeuvre.

La présente invention a pour objet un dispositif de transport combiné rail-route qui est au contraire de conception simple et qui permet de réaliser facilement un train de semi-remorques et de bogies.

Ce dispositif est caractérisé en ce que
- la semi-remorque comporte une suspension à hauteur variable et présente à l'avant deux mâchoires à fermeture automatique et ouverture commandée ainsi que des béquilles d'appui et à l'arrière deux pivots écartés transversalement l'un de l'autre.
- les bogies sont prévus, les uns pour être disposés entre deux semi-remorques et les autres pour être disposés à l'une des extrémités du train formé, en ce qu'un bogie intermédiaire est symétrique par rapport à son plan médian transversal et comprend d'une part une traverse centrale munie de deux mâchoires doubles à fermeture automatique et ouverture commandée qui ont la même disposition relative que les pivots arrière d'une semi-remorque, qui sont montés dans des blocs tournants et propres à s'accoupler auxdits pivots arrière, et d'autre part deux plateaux qui sont montés basculants par rapport à la traverse autour d'un axe transversal et qui portent chacun un pivot propre à s'accoupler dans des machoîres avant d'une semi-remorque, et qu'un bogie d'extrémité comporte une traverse munie d'une part de deux mâchoires doubles à fermeture automatique et ouverture commandée qui ont la même disposition relative que les pivots arrière d'une semi-remorque et sont propres à s'accoupler à ces pivots arrière et d'autre part d'un pivot propre à se verrouiller dans les mâchoires avant d'une semi-remorque et d'un ancrage propre à recevoir la cheville ouvrière d'une semi-remorque, ainsi qu'un vérin propre à exercer une traction sur l'avant d'une semi-remorque.

On a décrit ci-après, à titre d'exemple non limitatif un mode de réalisation du dispositif selon l'invention, avec référence aux dessins annexés dans lesquels :

La Figure 1 est un schéma montrant un train en cours de formation;

La Figure 2 est une vue en élévation d'une semi-remorque;

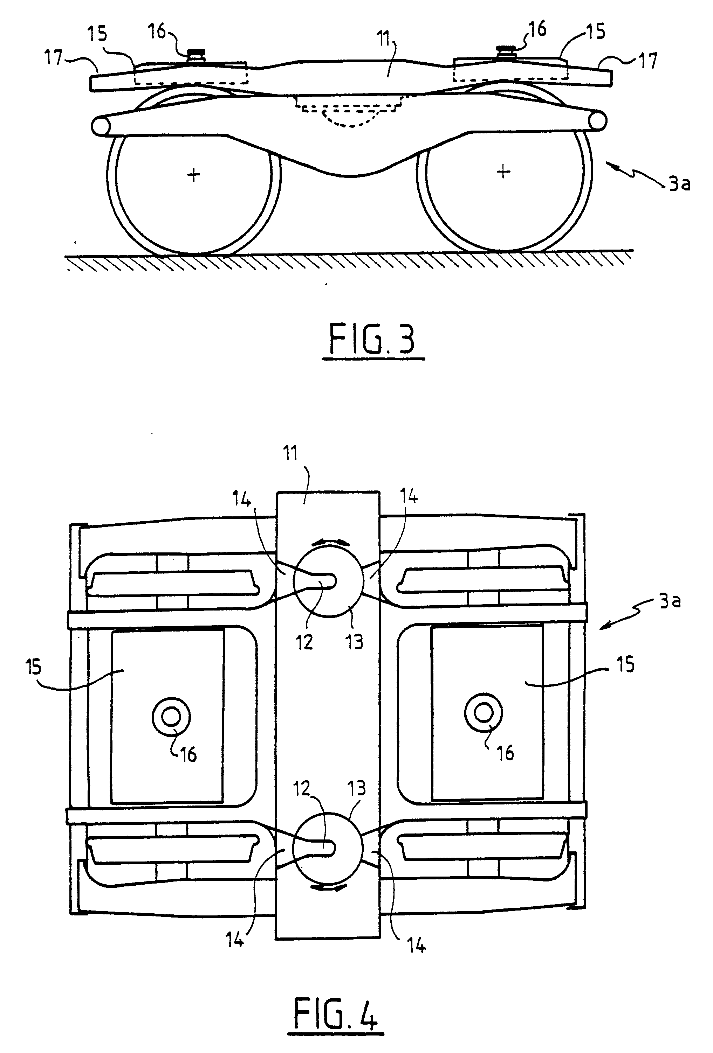

La Figure 3 est une vue en élévation d'un bogie intermédiaire;

La Figure 4 en est une vue par dessus;

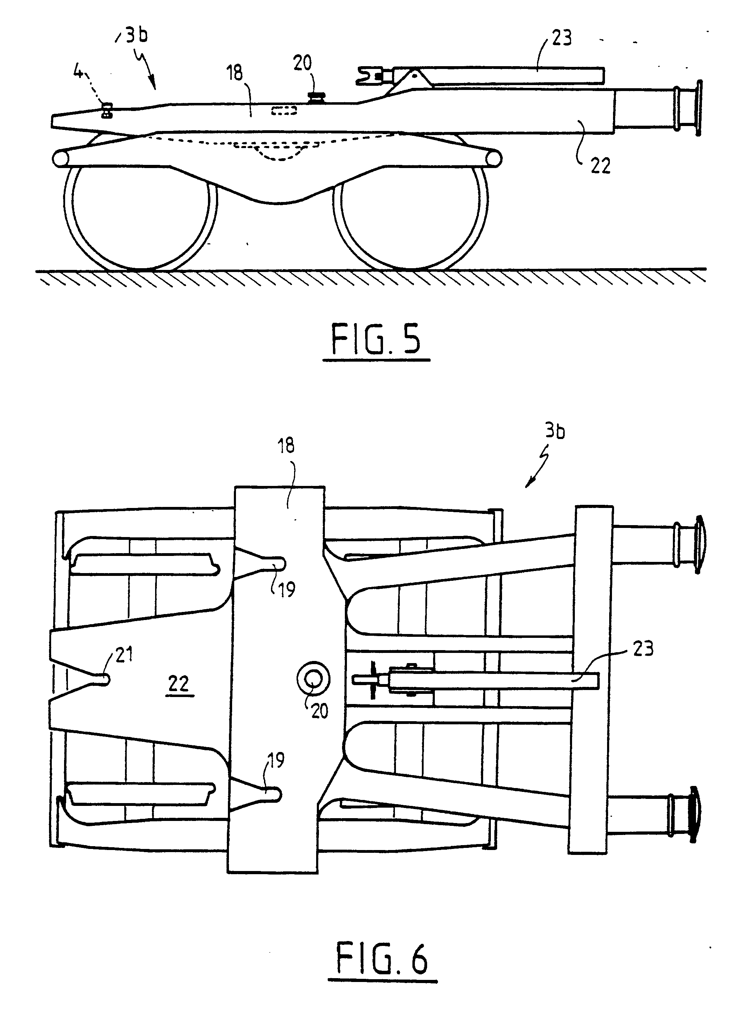

La Figure 5 est une vue en élévation d'un bogie d'extrémité;

La Figure 6 en est une vue par dessus;

Les Figures 7 à 9 montrent la constitution d'une rame;

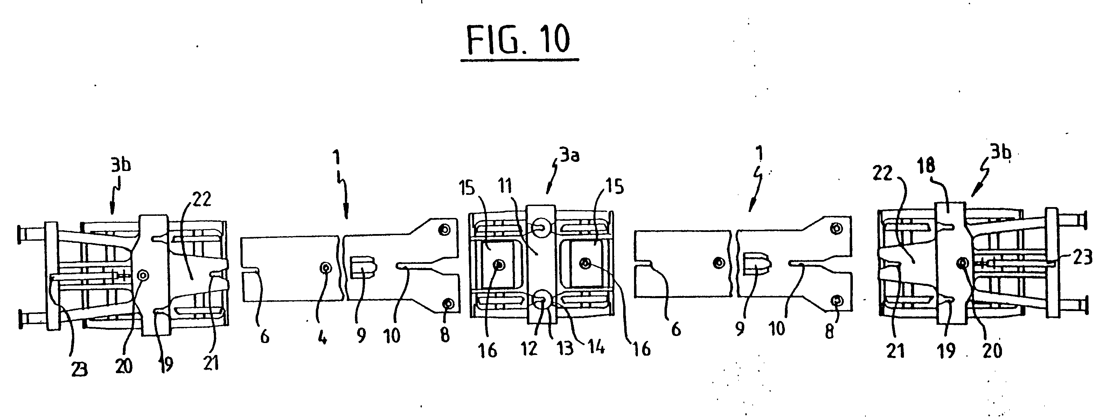

La Figure 10 est une vue par dessus d'un train.

L'ensemble de transport comprend des semi-remorques 1 propres chacune à être attelées à un tracteur 2. des bogies ferroviaires intermédiaires 3a et des bogies ferroviaires d'extrémité 3b.

Chacune des semi-remorques 1 comporte une suspension à hauteur variable. Elle présente à sa partie avant, outre le cheville ouvrière d'attelage 4 et la béquille d'appui 5. deux mâchoires 6, à fermeture automatique et ouverture commandée. devant lesquelles est disposé un bec de centrage 7. A sa partie arrière, elle est munie de deux pivots de verrouillage 8 écartés transversalement l'un de l'autre, d'un logement d'ancrage 9 et d'une saignée longitudinale 10.

Chacun des bogies intermédiaires 3a est symétrique par rapport à son plan médian transversal. Il comporte une traverse centrale 11 équipée de deux mâchoires doubles 12. à fermeture automatique et à ouverture commandée, qui sont écartées l'une de l'autre d'une distance égale à celle séparant les pivots 8 et dont les verrouillages sont montés dans des blocs tournants 13 susceptibles d'être orientés vers l'une ou l'autre des extrémités du bogie. Cette orientation peut être obtenue par une commande à vis et roue dentée ou un dispositif équivalent manoeuvrable à partir de l'un ou l'autre des côtés du bogie. En regard de chaque verrouillage, des becs d'entrée 14. situés sur la traverse permettent le centrage. Le bogie 3a comporte également deux plateaux basculants 15 dont l'axe d'articulation est perpendiculaire à l'axe longitudinal du bogie et qui supportent chacun un pivot de centrage et de verrouillage 16. A chacune de ses extrémités.le bogie présente une rampe de mise à niveau 17.

Les bogies d'extrémité 3b sont agencés pour pouvoir être placés en tête d'une rame ou en queue de celle-ci. Chacun d'eux comporte une traverse centrale 18 équipée de deux mâchoires doubles 19 analogues aux mâchoires 12. mais non orientables, d'un pivot 20 analogue au pivot 16 et disposé dans le plan médian longitudinal du bogie.

et d'un ancrage 21 également disposé dans ce plan et propre à engager et verrouiller la cheville ouvrière 4 d'une semi-remorque. Le bogie d'extrémité porte en outre un éperon 22 propre à venir s'engager dans le logement d'ancrage 9 prévu à l'arrière d'une semi-remorque, et un vérin de traction 23 propre à être attelé à l'avant d'une semi-remorque pour assurer la mise en place d'une semi-remorque côté avant.

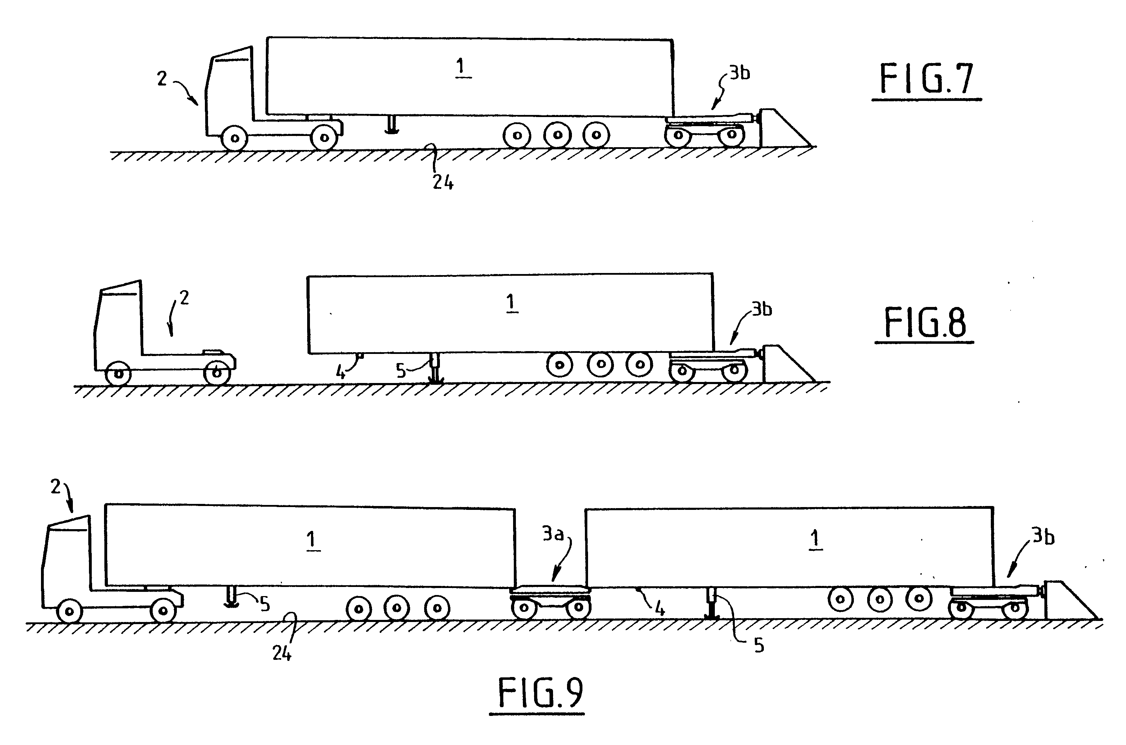

La constitution d'une rame est réalisée de la manière suivante. Un bogie d'extrémité 3b est mis sur le voie 24 de formation de la rame. Une semi-remorque 1 mue par un tracteur routier 2 est alors amenée en marche arrière à proximité du bogie (Figure 7). La semi-remorque est mise à niveau en "chargement ferroviaire", par action sur la suspension. Sous la poussée du tracteur 2, la semi-remorque s'engage sur le bogie et glisse sur les rampes 17 de sorte que les roues de la semi-remorque quittent légèrement le sol. En fin de mouvement, les pivots 8 de la semi-remorque s'engagent dans les mâchoires 19 du bogie et s'y verrouillent. On amène la béquille d'appui 5 de la semi-remorque au contact du sol et on désaccouple le tracteur 2 de cette semi-remorque. On relève le train routier de cette dernière et on met à niveau ferroviaire la partie avant de la semi-remorque en manoeuvrant les béquilles 5 de celle-ci. (Figure 8).

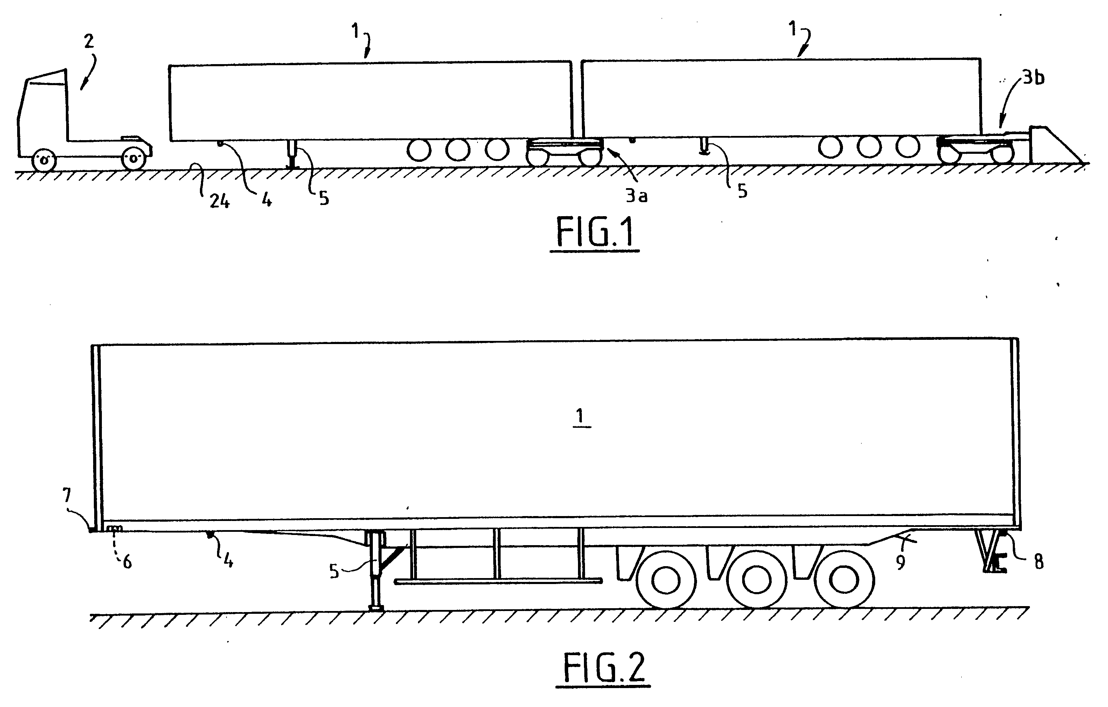

On pousse un bogie intermédiaire 3a sur la voie 24 jusqu'à ce qu'il vienne au contact de la première semi-remorque. Une deuxième semi-remorque 1 mue par le tracteur 2 est alors amenée en marche arrière à proximité du bogie 3a (Figure 9). Cette deuxième semi-remorque est à son tour mise à niveau ferroviaire. Sous la poussée du tracteur. La deuxième semi-remorque s'accouple au bogie intermédiaire 3a par engagement et verrouillage des axes 8 dans les mâchoires 12 convenablement orientées, le pivot 16 situé du côté de la semi-remorque glissant dans la saignée 10 de celle-ci; en même temps le bogie intermédiaire 3a s'accouple à la première semi-remorque par engagement et verrouillage de son autre pivot 16 dans les mâchoires 6. Puis on desaccouple le tracteur et on met à niveau ferroviaire l'avant de la seconde semi-remorque (Figure 1).

On poursuit ce processus en mettant en place alternativement un bogie intermédiaire 3a et une semi-remorque jusqu'à ce que toutes les semi-remorques soient en place.

Enfin un bogie d'extrémité 3b est placé contre l'avant de la dernière semi-remorque. Il est évidemment impossible de pousser manuellement ce bogie contre la semi-remorque, mais en agissant sur le vérin 23 du bogie d'extrémité, on rapproche ce bogie de l'avant de la semi-remorque de façon à assurer son accouplement à cette semi-remorque par engagement et verrouillage du pivot 20 dans les mâchoires 6.

On voit de la description qui précède que les dispositifs de centrage, d'appui et de verrouillage ne forment pas de saillie par rapport à l'enveloppe de la semi-remorque (longueur, largeur, hauteur) en permettant ainsi le volume maximal de chargement.

Il va de soi que la présente invention ne doit pas être considérée comme limitée au mode de réalisation décrit et représenté, mais en couvre, au contraire, toutes les variantes.

**Revendications**

1. Dispositif de transport combiné rail-route comprenant des semi-remorques (1) et des bogies (3a et 3b) sur lesquels les semi-remorques peuvent reposer et être fixées à volonté par leur extrémité avant ou par leur extrémité arrière de manière à pouvoir former un train comprenant une succession de semi-remorques et de bogies, une semi-remorque étant fixée à un bogie par son extrémité avant et au bogie suivant par son extrémité arrière, caractérisé en ce que la semi-remorque (1) comporte une suspension à hauteur variable et présente à l'avant deux mâchoires (6) à fermeture automatique et ouverture commandée ainsi que des béquilles d'appui (5) et à l'arrière deux pivots (8) écartés transversalement l'un de l'autre, en ce que les bogies sont prévus les uns pour être disposés entre deux semi-remorques (1) et les autres pour être disposés indifféremment à l'une ou l'autre des extrémités du train formé, en ce qu'un bogie intermédiaire (3a) est symétrique par rapport à son plan médian transversal et comprend d'une part une traverse centrale (11) munie de deux mâchoires doubles (12) à fermeture automatique et ouverture commandée, qui ont la même disposition relative que les pivots arrière (8) d'une semi-remorque, sont montées dans des blocs tournants (13) et propres à s'accoupler auxdits pivots arrière (8), et d'autre part deux plateaux (15) qui sont montés basculants par rapport à la traverse (11) autour d'un axe transversal et qui portent chacun un pivot (16), propre à s'accoupler dans les mâchoires avant (6) d'une semi-remorque, et qu'un bogie d'extrémité (3b) comporte une traverse (18) munie d'une part de deux mâchoires doubles (19) à fermeture automatique et ouverture commandée qui ont la même disposition relative que les pivots (8) d'une semi-remorque et sont propres à s'accoupler à ces pivots arrière et d'autre part d'un pivot (20) propre à se verrouiller dans les mâchoires avant (6) d'une semi-remorque et d'un ancrage (21) propre à recevoir la cheville-ouvrière (4) d'une semi-remorque, ainsi qu'un vérin (23) propre à exercer une traction ou une poussée sur l'avant d'une semi-remorque (1).

2. Dispositif selon la revendication 1, caractérisé en ce que la semi-remorque (1) comporte un bec de centrage (7) devant la mâchoire double (6).

3. Dispositif selon la revendication 1 ou 2, caractérisé en ce que la semi-remorque (1) présente à son extrémité arrière un logement d'ancrage (9) destiné à recevoir un éperon (22) d'un bogie d'extrémité.

4. Dispositif selon l'une quelconque des revendications précédentes, caractérisé en ce que la semi-remorque (1) présente une saignée longitudinale (10) pour le passage d'un pivot (16) d'un bogie intermédiaire (3a).

5. Dispositif selon l'une quelconque des revendications précédentes, caractérisé en ce que la traverse centrale (11) du bogie intermédiaire (3a) comporte un bec de centrage (14) de part et d'autre de chaque mâchoire double (12) orientable.

6. Dispositif selon l'une quelconque des revendications précédentes, caractérisé en ce que le bogie intermédiaire (3a) présente de chaque côté une rampe inclinée (17).

7. Dispositif selon l'une quelconque des revendications précédentes, caractérisé en ce que le bogie d'extrémité comporte un éperon (22) propre à s'engager dans un logement (9) de la semi-remorque.

8. Dispositif selon l'une quelconque des revendications précédentes, caractérisé en ce que les dispositifs de centrage, d'appui et de verrouillage ne forment pas de saillie par rapport à l'enveloppe de la semi-remorque (longueur, largeur, hauteur) en permettant ainsi le volume maximal de chargement.

FIG.1

FIG.2

## FIG. 3

## FIG. 4

FIG.5

FIG.6

FIG.7

FIG.8

FIG.9

EP 0 401 102 A1

# FIG. 10

EP 0 401 102 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2709969 (F.ANDERT) <br> * colonne 8, lignes 33 → 70; figures 1-18 * <br> --- | 1, 4-6, 8 | B60F1/04 <br> B61D3/18 |
| A | EP-A-143614 (TRAILER TRAIN LTD) <br> * le document en entier * <br> --- | 1, 2, 4, 5, 8 | |
| A | EP-A-209312 (TRAILER TRAIN LTD) <br> * le document en entier * <br> --- | 1, 2, 4-6, 8 | |
| A | US-A-2036535 (C.NELSON) <br> * le document en entier * <br> --- | 1, 4, 5, 8 | |
| A | WO-A-8903784 (FERROSUD) <br> * le document en entier * <br> --- | 1, 2, 4, 5, 8 | |
| A | GB-A-2150900 (ACKERMANN-FRUEHAUF CORPORATION) <br> * page 2, lignes 50 - 80; figures 1-4 * <br> --- | 1, 8 | |
| A | US-A-2513552 (C.DOVE) <br> * le document en entier * <br> --- | 1, 5, 6, 8 | DOMAINES TECHNIQUES RECHERCHES (Int. Cl.5) |
| A | US-A-2844108 (C.MADDEN) <br> * colonne 3, lignes 60 - 73; figures 1-5 * <br> ----- | 1, 5, 8 | B60F <br> B61D <br> B61F |

Le présent rapport a été établi pour toutes les revendications

| Lieu de la recherche | Date d'achèvement de la recherche | Examinateur |
|---|---|---|
| LA HAYE | 06 SEPTEMBRE 1990 | CZAJKOWSKI A.R. |

EPO FORM 1503 03.82 (P0402)